# EUROPEAN PATENT APPLICATION

(11) **EP 4 726 311 A1**
(43) Date of publication of application: **15.04.2026**
(21) Application number: 25207324.2
(22) Date of filing: 07.10.2025
(51) Int. Cl.: F28D 7/10, A23G 9/22

(54) **HEAT EXCHANGER**

(30) Priority: 08.10.2024 IT 202400022320
(71) Applicant: Poli S.r.l., 40013 Castel Maggiore (BO) (IT)
(72) Inventor: Zaniboni, Giorgio, 40013 Castel Maggiore (Bologna) (IT)
(74) Representative: Puggioli, Tommaso

(57) **Abstract**

A heat exchanger for a machine adapted to produce ice creams, slush drinks or water-ices, which comprises:
- a first hollow body (1) extending along a first main direction of extension (D1) and having a first end (1A), a second end (1B) and a side wall (1L) extending between the first end (1A) and the second end (1B),
- a second hollow body (2) extending along the first main direction of extension (D1) and having a first end (2A), a second end and a side wall (2B) extending between the third end (2A) and the fourth end (2B);
the second hollow body (2) is arranged inside the first hollow body (1) and welded to the first hollow body (1) at the respective first ends (1A); the side walls (1L, 2L) of the first and the second hollow body (1, 2), joined to one another, define a gap (3) closed by a flange (4) welded to the second ends (1A, 1B) of the first and the second hollow body (1, 2).

## Description

The present invention relates to a heat exchanger, in particular a heat exchanger for a machine intended to produce ice creams, slush drinks or water-ices.

Generally, the machines for producing ice cream, slush drinks or water-ices comprise heat exchangers, usually cylindrical, around which a copper coil is wound, through which the cooling fluid flows.

Disadvantageously, such solutions are particularly costly due to the use of copper.

Furthermore, the presence of the coil does not ensure uniform cooling due to the non-continuous contact of the windings of the coil with the surface to be cooled.

Contact pastes are sometimes used to remedy such lack of uniformity, but such pastes make the construction complex and increase the costs. Known heat exchangers, such as the one described in DE102019121027A1, further have particularly complex structures in which the coil is inserted in a gap defined between two hollow cylindrical bodies closed at the ends, e.g., by flanges.

The need is felt to overcome the above-mentioned drawbacks of the prior art by simplifying the structure of heat exchangers, while at the same time reducing their costs and improving their cooling performance.

It is the object of the present invention to meet the aforementioned need by providing a heat exchanger that is more efficient, more cost-effective and simpler to manufacture.

The specified object is substantially achieved by a heat exchanger comprising the technical features set out in one or more of the appended claims. The dependent claims correspond to possible different embodiments of the invention.

According to an aspect of the description, the description relates to a heat exchanger for a machine adapted to produce ice creams, slush drinks or water-ices.

The exchanger comprises a first hollow body which extends along a first main direction of extension.

The first hollow body has a first end, a second end and a side wall extending between the first end and the second end.

The first hollow body has a first opening at the first end and a second opening at the second end.

The exchanger comprises a second hollow body extending along the first main direction of extension.

The second body has a first end, a second end and a side wall extending between the first end and the second end.

The second hollow body has a first opening at the first end and a second opening at the second end.

The second hollow body is arranged within the first hollow body and is welded to the first hollow body at the respective first ends.

In other words, the first end of the first hollow body is welded to the first end of the second hollow body, and the gap is closed, at the first end of the first and second hollow body, by joining them.

The first side wall defines a gap with the second side wall.

The exchanger comprises a flange welded to the second end of the first hollow body and to the second end of the second hollow body.

Advantageously, the flange welded to the second end of the first and second hollow body defines the gap with the first and the second side wall. Therefore, the gap is delimited by only three components joined to one another because the side walls of the first and of the second hollow body are directly joined to one another without further components. Advantageously, the first body and the second body, directly welded to one another, constitute a single piece.

Defining the gap in this manner makes it possible to ensure good ease of assembly of the exchanger.

The flange has a first through hole in communication with the gap and a second through hole in communication with the gap.

The exchanger comprises a conveying element or conduit configured to feed a cooling fluid into the gap.

The conveying element passes through the first through hole of the flange. The conveying element is preferably partially inserted in the gap. Advantageously, the conveying element allows the introduction of the cooling fluid, preferably gaseous, into the gap.

The cooling fluid is uniformly distributed in the gap contacting and cooling the first wall in a uniform manner.

The presence of the gap thus defined ensures a good distribution of cold on the first side wall.

Advantageously, the gap and the conveying element make it possible to obtain an exchanger which is more efficient, more cost-effective and simpler to manufacture.

The exchanger comprises a discharge element or conduit inserted in the second through hole to discharge cooling fluid from the gap. Advantageously, the discharge element makes it possible to collect the condensate of the cooling fluid.

Preferably, the first hollow body is a cylinder that extends along a first rotation axis.

According to an example, the cylinder has a diameter comprised between 70 mm and 200 mm.

Preferably, the second hollow body comprises a central cylindrical portion that extends along a second rotation axis.

Preferably, the second hollow body comprises a flared portion at the first end.

The flared portion widens toward the first hollow body substantially at the first end of the first hollow body 1.

The second hollow body comprises an end portion, preferably cylindrical, extending from the flared portion toward the first end of the second hollow body.

The end portion extends along the second rotation axis.

The second hollow body is welded to the first hollow body by means of the end portion.

Advantageously, the outer diameter of the end portion substantially coincides with the inner diameter of the first hollow body, significantly facilitating the joining of the two hollow bodies.

Preferably, the second hollow body comprises a tapered portion at the second end.

The tapered portion narrows toward the second rotation axis A2 and the gap is enlarged at the tapered portion.

In an example, the central cylindrical portion of the second hollow body has a diameter comprised between 60 mm and 170 mm.

Preferably, the first hollow body and the second hollow body are coaxial.

In other words, the first rotation axis coincides with the second rotation axis.

Preferably, the gap has a thickness comprised between 2 mm and 6 mm along a direction transverse to the first direction of extension.

The first wall defines an outer wall and the second wall defines an inner wall which delimit the gap.

Therefore, at one end the inner wall is welded to the inner wall, at the other end of the single-piece the flange is welded to the outer wall and to the inner wall.

In a preferred example, the first wall side has a thickness comprised between 4 mm and 0.8 mm.

In a preferred example, the first wall side has a thickness equal to 1.0 mm. Advantageously, such wall thickness ensures a better distribution of the cold and a more efficient exchanger.

Advantageously, such thickness of the first wall ensures an optimal transmission of the cold from the cooling fluid to the product which is located outside the first hollow body.

In a preferred example, the second side wall has a thickness comprised between 0.8 mm and 4 mm.

In an example, the conveying element is a coil.

The features of the invention may be clearly found in the contents of the claims hereinbelow and the advantages thereof will become more apparent from the following detailed description, made with reference to the accompanying drawings that show an embodiment merely given by way of non-limiting example, in which:
- figure 1 shows a diagrammatic perspective view of a heat exchanger according to the present description;
- figure 2A shows an exploded view of a first embodiment of a heat exchanger according to the present description,
- figure 2B shows an exploded view of a second embodiment of a heat exchanger according to the present description,
- figure 3A shows a section view of a first embodiment of a heat exchanger according to the present description,
- figure 3B shows a section view of a first embodiment of a heat exchanger according to the present description.
- figure 4 shows a lower front view of a heat exchanger according to the present description.

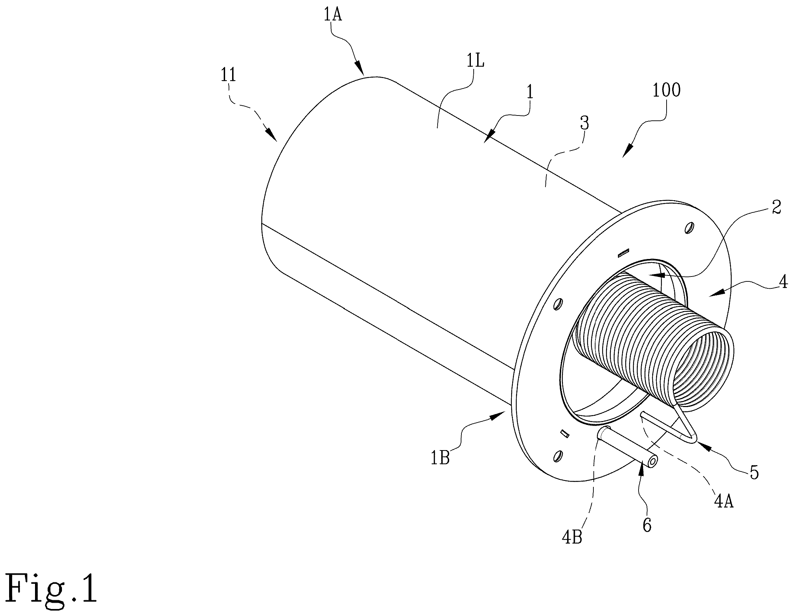

With particular reference to figure 1,00 indicates a heat exchanger for a machine adapted to produce ice creams, slush drinks or water-ices, not shown.

The exchanger 100 comprises a hollow body 1, which extends along a first main direction of extension D1.

The hollow body 1 has an end 1A and an end 1B and a side wall 1L, which extends between the ends 1A and 1B.

In an embodiment, the side wall 1L has a thickness comprised between 0.8 mm and 4 mm.

Preferably, the side wall 1L has a thickness of 1 mm.

The side wall 1L is one of the walls of the heat exchanger 100, which needs to be cooled and which will be in contact with the food product to be cooled.

The hollow body 1 has an opening 11 at the end 1A and an opening 12 at the end 1B.

In an embodiment, the hollow body 1 is a cylinder which extends along a rotation axis A1.

In an embodiment, the cylinder has a diameter comprised between 70 mm and 200 mm.

The exchanger 100 comprises a hollow body 2 which extends along the first main direction of extension D1.

The hollow body 2 is inserted inside the hollow body 1 so as to define, at least in part, a gap 3 therewith.

The hollow body 2 has an end 2A and an end 2B and a side wall 2L, which extends between the ends 2A and 2B.

The hollow body 2 has an opening 21 at the end 2A and an opening 22 at the end 2B.

In an embodiment, the hollow body 2 comprises a central cylindrical portion 23, which extends along a rotation axis A2.

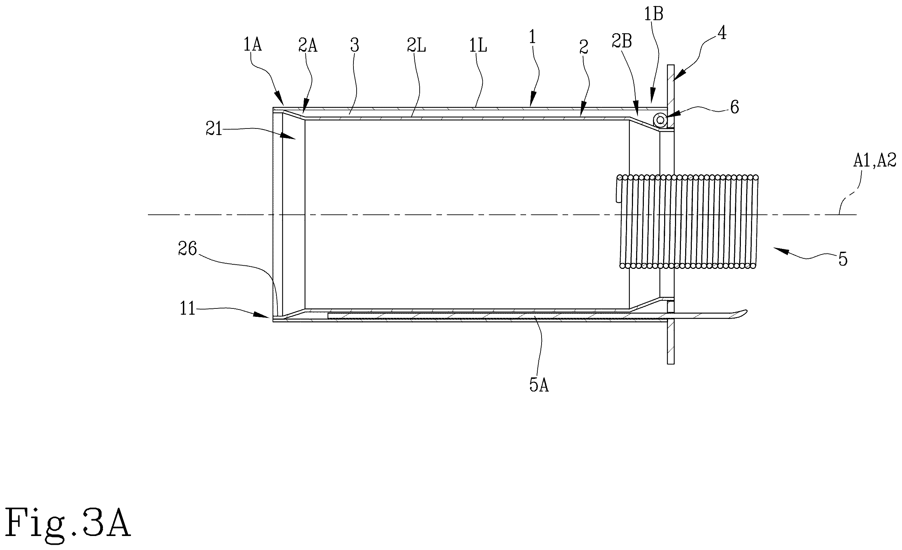

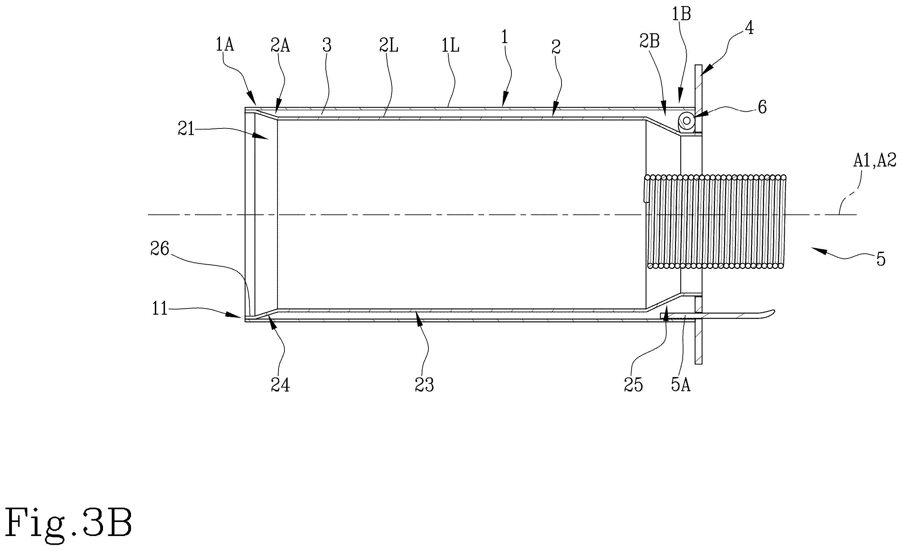

In a preferred embodiment, e.g., with reference to figures 3A and 3B, the hollow bodies 1 and 2 are coaxial and the two rotation axes A1 and A2 coincide.

In an embodiment, the central cylindrical portion 23 has a diameter comprised between 60 mm and 170 mm.

In an embodiment, the hollow body 2 comprises a flared portion 24 at the end 2A and a tapered portion 25 at the end 2B.

The flared portion 24 widens toward the first hollow body 1 substantially at the first end 1A of the hollow body 1.

The tapered portion 25 narrows toward the rotation axis A2 and the gap 3 is enlarged at the tapered portion 25.

The second hollow body 2 comprises an end portion 26, cylindrical in the illustrated embodiment, extending from the flared portion 26 toward the first end 2A of the second hollow body 2.

The end portion 26 extends along the rotation axis A2.

The second hollow body 2 is welded to the first hollow body 1 by means of the end portion 26.

In practice, the outer diameter of the end portion 26 is substantially coincident with the inner diameter of the first hollow body 1, and the first and second hollow bodies 1, 2 are joined, preferably by welding, at the end portion 26 of the second hollow body 2.

Thereby, the aforementioned opening 11 of the hollow body 1 is closed, as is also the gap 3, at the junction between the side wall 1L and the side wall 2L at the ends 1A, 2A.As visible from the figures 3A and 3B, the wall 1L and the wall 2L define the gap 3.

Both wall 1L and wall 2L are walls that must be cooled and that will come into contact with the food product to be cooled.

The walls 1L and 2L are welded directly to one another at the end 1A of the body 1 and at the end 2A of the body 2.

In an embodiment, the bodies 1 and 2 are made as a single piece.

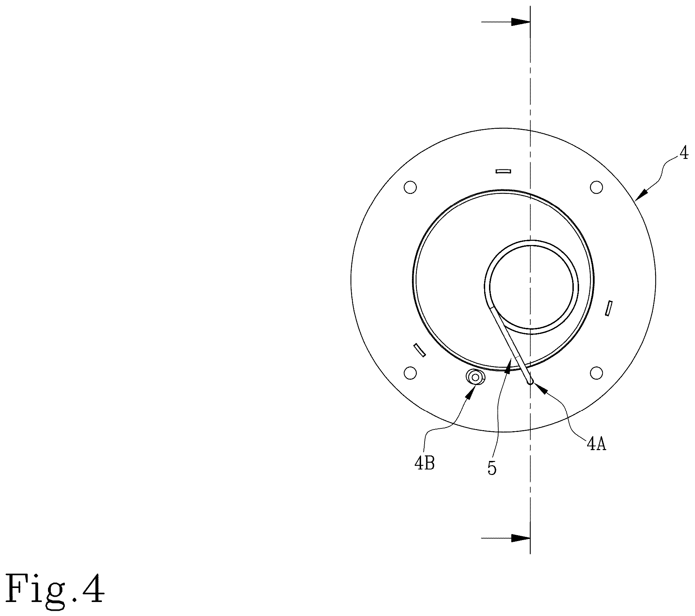

As shown, for example, in the figure 4, the exchanger 100 comprises a flange 4.

The flange 4 is welded to the end 1B of the body 1 and to the end 2B of the body 2.

The flange 4 is welded to the hollow body 1 and to the hollow body 2 at the opening 12, which preferably remains substantially closed, and at the opening 22.

The flange 4 delimits the gap 3 at the ends 1B and 2B.

In other words, the gap 3 is delimited by the walls 1L and 2L, by the flange 4 at the ends 1B and 2B, and by the direct joining of the side walls 1L and 2L at the ends 1A and 2A on the side opposite the flange 4 with respect to the side walls 1L, 2L of the first and the second hollow body 1, 2.

The flange 4 comprises two through holes 4A and 4B, both in communication with the gap 3.

The exchanger 100 comprises an element or conveying conduit 5 configured to feed a cooling fluid into the gap 3.

The cooling fluid, preferably a gas, diffuses throughout the entire gap 3, uniformly cooling the side wall 1L.

The gap 3 preferably has a thickness comprised between 2 mm and 4 mm along a direction transverse to the first direction of extension.

The conveying element 5 passes through the through hole 4A.

The conveying element 5 is inserted only in a minimal part inside the gap 3.

In particular, the conveying element 5 has a tubular portion 5A inserted into the gap 3.

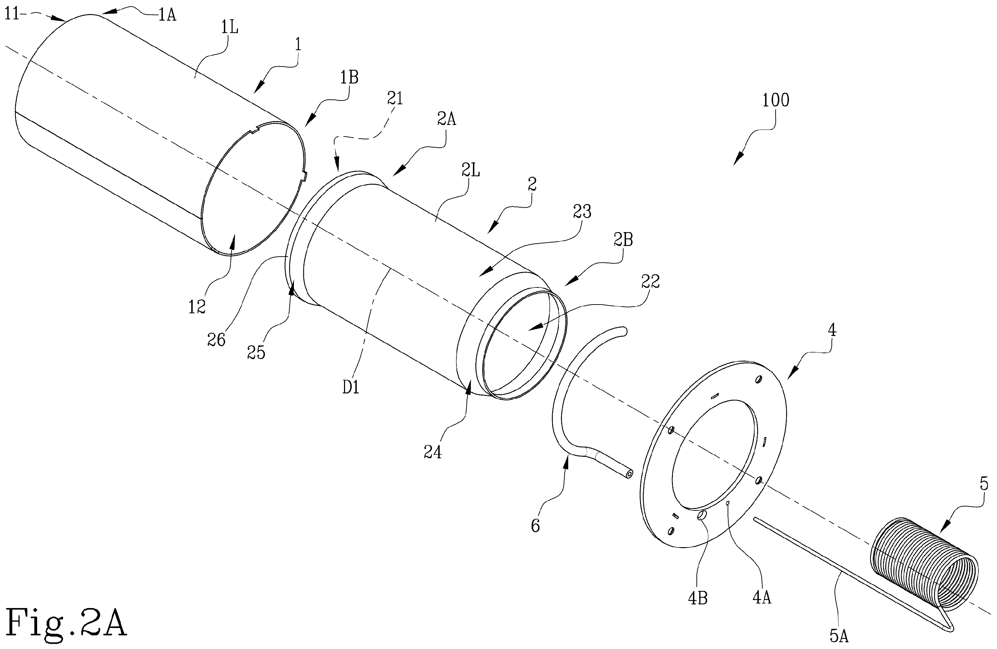

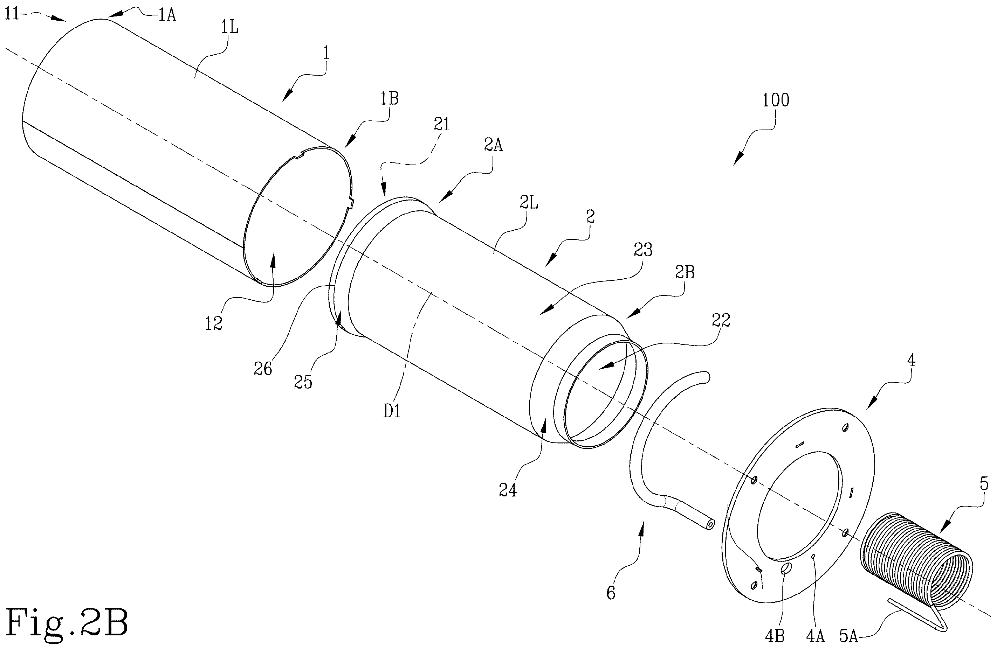

As shown in figures 2A and 2B and figures 3A and 3B, the portion 5A inserted within the gap may be more or less extended.

The conveying element 5 allows feeding the cooling fluid into the gap and the consequent cooling of the walls 1L, 2L in contact, in use, with the food product to be cooled.

In an embodiment, the conveying element 5 comprises a coil.

The exchanger 100 comprises a cooling fluid discharge element or conduit 6 inserted in the hole 4B.

In an embodiment, not shown, the exchanger 100 comprises a cap for closing the opening 21.

## Claims

1. A heat exchanger for a machine adapted to produce ice creams, slush drinks or water-ices, said heat exchanger comprising:
- a first hollow body (1) extending along a first main direction of extension (D1) and having a first end (1A), a second end (1B) and a side wall (1L) extending between the first end (1A) and the second end (1B),
- a second hollow body (2) extending along the first main direction of extension (D1) and having a first end (2A), a second end (2B) and a side wall (2L) extending between the first end (2A) and the second end (2B) of the second hollow body (2), the second hollow body (2) being arranged inside the first hollow body (1),
the first side wall (1L) of the first hollow body (1) defining a gap (3) with the side wall (2L) of the second hollow body, said heat exchanger comprising
- a flange (4) welded to the second end (1B) of the first hollow body (1) and to the second end (2B) of the second hollow body (2) to at least in part close said gap (3), said flange (4) having a first through hole (4A) in communication with the gap (3) and a second through hole (4B) in communication with the gap (3), said heat exchanger being **characterized in that** it comprises
- a conveying conduit (5) inserted inside the first through hole (4A) to feed a cooling fluid into the gap (3), and a discharge conduit (6) inserted in the second through hole (4B) to discharge said cooling fluid from the gap (3), the first end (1A) of the first hollow body (1) being welded to the first end (2A) of the second hollow body (2) to close said gap (3) on the side opposite the flange (4) with respect to the side walls (1L, 2L) of the first and the second hollow body (1, 2).

2. A heat exchanger according to claim 1, wherein the second hollow body (2) has a first opening (32) at the first end (2A) and a second opening (22) at the second end (2B).

3. A heat exchanger according to claim 1 or 2, wherein the second hollow body (2) comprises a flared portion (24) at the first end (2A), said flared portion (24) widening towards the first hollow body (1) at the first end (2A).

4. A heat exchanger according to claim 3, wherein the second hollow body (2) comprises an end portion (26) extending from the flared portion (24) toward the first end (2A) of the second hollow body (2), said second hollow body (2) being welded to the first hollow body (1) by means of said end portion (26).

5. A heat exchanger according to any one of the preceding claims, wherein the first hollow body (1) is a cylinder extending along a first rotation axis and preferably having a diameter comprised between 70 mm and 200 mm.

6. A heat exchanger according to any one of the preceding claims, wherein the second hollow body (2) comprises a central cylindrical portion (23) extending along a second rotation axis, said central cylindrical portion (23) preferably having a diameter comprised between 60 mm and 170 mm.

7. A heat exchanger according to any one of the preceding claims, wherein the first hollow body (1) and the second hollow body (2) are coaxial.

8. A heat exchanger according to claims 5 and 6, wherein the first rotation axis coincides with the second rotation axis.

9. A heat exchanger according to any one of the preceding claims, wherein the gap (3) has a thickness comprised between 2 mm and 6 mm along a direction transversal to the first direction of extension (D1).

10. A heat exchanger according to any one of the preceding claims, wherein the first hollow body (1) and the second hollow body (2) are made in a single piece.

11. A heat exchanger according to any one of the preceding claims, wherein the first side wall (1L) has a thickness comprised between 0.8 mm and 4 mm.

12. A heat exchanger according to any one of the preceding claims, wherein the conveying element (5) is a coil.

13. A heat exchanger according to any one of the preceding claims, wherein the first conduit is partially inserted in the gap (3).
